# EUROPÄISCHE PATENTSCHRIFT

(11) **EP 0 946 940 B1**
(45) Veröffentlichungstag und Bekanntmachung des Hinweises auf die Patenterteilung: **05.07.2000**
(21) Anmeldenummer: 97952709.0
(22) Anmeldetag: 05.12.1997
(51) Int. Cl.: G11B 7/00

(54) **CD-ROM-LAUFWERK**
CD-ROM DRIVE
LECTEUR DE CD-ROM

(30) Priorität: 19.12.1996 DE 19653109
(43) Veröffentlichungstag der Anmeldung: 06.10.1999
(73) Patentinhaber: Siemens Nixdorf Informationssysteme AG, 33106 Paderborn (DE)
(72) Erfinder: FAILER, Albert, D-86453 Dasing (DE)
(74) Vertreter: Epping, Wilhelm, Dr.-Ing.
(86) Internationale Anmeldenummer: DE9702843
(87) Internationale Veröffentlichungsnummer: WO9827549

(56) Entgegenhaltungen:
- EP-A- 0 431 928
- EP-A- 0 807 927
- EP-A- 0 821 356
- JP-A- 9 251 702
- "12X ATAPI CD-ROM DRIVE UNIT DR-444 PRODUCT SPECIFICATIONS" 17.September 1996 , PIONEER ELECTRONIC CORPORATION XP002066715 siehe Seite 3 siehe Seite 6
- THOMPSON: "Fast, Faster, Fastest: CD-ROM'S New 8X, 10X, 12X Drives" EMEDIA PROFESSIONAL, Bd. 10, Nr. 2, Februar 1997, USA, Seiten 30-50, XP002066713
- ANONYMOUS: "Method for Select Rotational Speed of Compact Disk-Read Only Memory Using Eject Button" IBM TECHNICAL DISCLOSURE BULLETIN, Bd. 41, Nr. 1, Januar 1998, NEW YORK, US, Seiten 105-106, XP002066714

## Beschreibung

Die Erfindung betrifft ein CD-ROM-Laufwerk nach den Merkmalen des Oberbegriffs des Anspruchs 1.

CD-ROM-Laufwerke arbeiten entsprechend den Anforderungen an höhere Leseleistungen mit immer höheren Drehzahlen. Ausgehend von einfacher, doppelter bis derzeit 8-facher Geschwindigkeit werden entsprechende Laufwerke mit Drehzahlen im Bereich von 500 bis 6.500 U/min angeboten, so daß die Laufwerke je nach Bedarf auf verschiedene Geschwindigkeitsbereiche eingestellt werden können. Im Gegensatz zu Festplatten-Speicherlaufwerken, bei denen aufgrund der fest eingebauten Festplatten eine extrem präzise Justierung und Zentrierung möglich ist, besteht bei CD-ROM-Laufwerken das Problem, daß hier nur bei einem relativ kleinen Anteil der in das Laufwerk einsetzbaren Datenscheiben eine ausreichend genaue Zentrierung erreicht werden kann. Dies hat insbesondere bei steigenden Drehzahlen zur Folge, daß bei einem Großteil der eingesetzten Datenscheiben aufgrund der nicht optimalen Positionierung Vibrationen und/oder Laufgeräusche auftreten, die den Arbeitsablauf an einem entsprechend ausgestatteten Personalcomputer erheblich erschweren und behindern. Neben einer hohen Geräuschemission durch das Laufwerk, die auch auf das gesamte Gehäuse übergreifen kann, führt dies auch zu unnötig hohen mechanischen Belastungen der Laufwerke, was wiederum Wartungs-, Reparatur- und sonstige Folgekosten nach sich zieht. Auftretende Vibrationen am CD-ROM-Laufwerk können meist auch auf benachbarte Festplatten- oder Diskettenlaufwerke übertragen werden, so daß auch deren Betrieb empfindlich gestört werden kann. Letztlich führt dies zur Unzufriedenheit beim Kunden, der die CD-ROM-Laufwerke insgesamt nicht mehr akzeptiert.

Bekanntlich sind bei einer Compact-Disc die Spuren in Form einer von innen nach außen laufenden Spirale angebracht, wobei alle Sektoren im Unterschied zu einer Festplatte gleich lang sind. Je nach Betriebsmodus des CD-Rom- Laufwerks bedeutet dies entweder, dass die Drehzahl der Compact-Disc vom innen angeordneten ersten Sektor bis zum aussen liegenden letzten Sektor innerhalb eines vorgegebenen Geschwindigkeitsbereichs linear von z. B. 6.500 U/min auf 3.000 U/min reduziert wird (sogenannter CLV-Modus), oder dass die Drehzahl konstant bleibt mit der Folge, dass die Lesegeschwindigkeit nach aussen zu stetig zunimmt (sogenannter CAV-Modus). Tritt nun der Fall ein, daß ein Sektor nicht fehlerfrei gelesen werden kann, dann schaltet das Laufwerk automatisch in den nächst niedrigeren Geschwindigkeitsbereich.

Eine analoge Betriebsweise ist bei auftretenden Vibrationen und/oder Geräuschemissionen an sich nicht vorgesehen. Jedoch ist es bei sogenannten Dual-Mode-CAV/CLV-Laufwerken bekannt geworden (siehe die eingangs erwähnte Product Specification der Fa. Pioneer, Sept. 1996), dass bei auftretenden Vibrationen eine automatische Umschaltung vom CLV-Modus in den CAV-Modus erfolgt, d.h. auf eine innerhalb des gewählten Geschwindigkeitsbereichs gleichbleibende, aber insgesamt etwas niedrigere Drehzahl mit dem Vorteil, dass die Gefahr von auftretenden Resonanzen innerhalb des gewählten Geschwindigkeitsgereichs bei einer festen Drehzahl wesentlich geringer ist.

Pioneer Electronic Corporation: "12X ATAPI CD-ROM DRIVE UNIT DR-444 PRODUCT SPECIFICATIONS", XP002066715 beschreibt ein CD Laufwerk, welches die im Oberbegriff des Anspruchs 1 aufgeführten Merkmale umfaßt. Bei auftretenden Vibrationen erfolgt eine Umschaltung des Laufwerks auf eine niedrigere Drehzahl automatisch.

Der vorliegenden Erfindung liegt nun die Aufgabe zugrunde, ein CD-ROM-Laufwerk in der Weise weiterzubilden, daß ein durch Vibrationen und/oder Geräuschemissionen beeinträchtigter Betriebsablauf mit einfachen Mitteln vermieden werden kann und das CD-ROM-Laufwerk wieder in einen störungsfreien Betrieb zurückkehrt.

Diese Aufgabe wird erfindungsgemäß durch die Merkmale des Anspruchs 1 gelöst. Vorteilhafte Ausgestaltungen der Erfindung sind in Unteransprüchen angegeben. Besonders vorteilhaft ist es, wenn die Steuertaste zur Umschaltung des Laufwerks in einen niedrigeren Geschwindigkeitsbereich mit der Bedientaste für den CD-Schubladentransport kombiniert wird, weil bei herkömmlichen Laufwerken üblicherweise kaum Platz für eine weitere Bedientaste zur Verfügung steht. Je nach Dauer des Tastendrucks wird entweder die Funktion Drehzahlreduzierung oder die Funktion Schubladentransport ausgelöst.

Im folgenden wird ein Ausführungsbeispiel der Erfindung anhand der Zeichnung näher erläutert. Dabei zeigen
- FIG 1: das Prinzipschaltbild eines CD-ROM-Laufwerks
- FIG 2: ein Flußdiagramm für die erfindungsgemäße Betriebsweise des CD-ROM-Laufwerks.

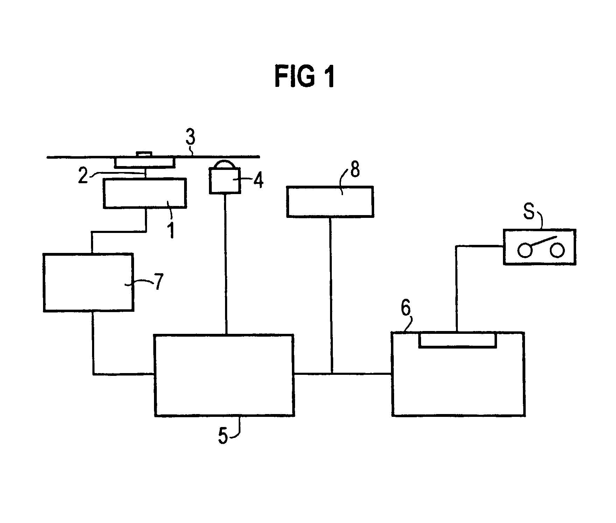

Die FIG 1 zeigt den prinzipiellen Aufbau eines CD-ROM-Laufwerks. Es besteht aus einer mit Hilfe eines Motors 1 angetriebenen Spindel 2, auf die eine CD-Scheibe 3 zentrisch aufgesetzt wird. Die von der Abtastoptik 4 aufgenommenen Signale werden einem Datenprozessor 5 zur weiteren Verarbeitung zugeführt. Ein weiterer Prozessor 6 überwacht einerseits die jeweils aktuelle Stellung eines Schalters S und liefert andererseits Steuersignale für die Motorsteuerung 7 und die Schubladensteuerung 8, die den Transport der CD-Scheibe 3 in die Betriebsstellung, d. h. zur Spindel 2 und von dort wieder zurück in die Entnahmestation steuert. Je nach Einschaltdauer des Schalters S liefert der Prozessor 6 entweder ein Signal an die Motorsteuerung 7 zur Reduzierung der Geschwindigkeit oder ein Signal an die Schubladensteuerung 8 für den Transport der CD-Scheibe aus der Betriebsstellung in die Ausgabeposition.

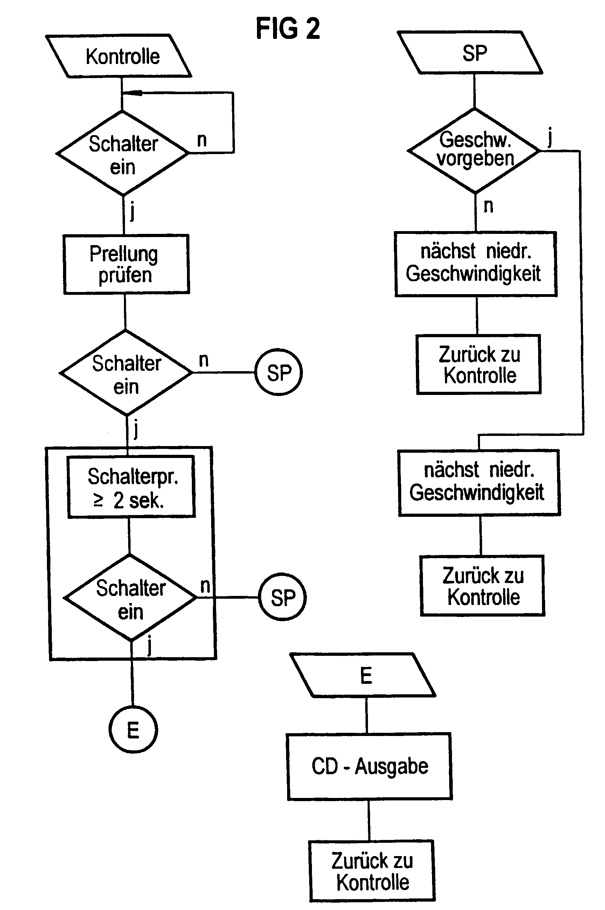

Anhand von Flußdiagrammen, die in FIG 2 dargestellt sind, wird die Betriebsweise des CD-ROM-Laufwerks noch weiter erläutert. In der Routine "Kontrolle" wird die Funktion des Schalters S, d. h. sein Schaltzustand -Aus/Ein- in vorgegebenen Abfragezyklen überwacht. Wird nun der Schalter S betätigt, wird die Schaltzustandsänderung variabel, z. B. für ca. 100 ns auf Prellung und Aktivzustand überwacht und geprüft. Falls nach einer vorgegebenen Zeitspanne von beispielsweise < 0,5 Sekunden der Schalter nicht mehr aktiv ist, wird in die Routine "SP" verzweigt. Im anderen Fall, d. h. wenn der Schalter länger aktiv bleibt, wird geprüft, ob dieser Aktivzustand wenigstens 2 Sekunden angedauert hat. Trifft dies zu, wird in die Routine "E" verzweigt, was bedeutet, daß die CD-Scheibe ausgeworfen, d. h. die Schublade mit der CD-Scheibe ausgefahren wird. Beim Einlegen einer neuen Datenscheibe kehrt die Routine "E" zurück zur Routine "Kontrolle".

Bei Verzweigung in die Routine "SP" wird zu Beginn zunächst geprüft, ob Geschwindigkeitsvorgaben beachtet werden müssen. Falls dies nicht erforderlich ist, kann sofort auf die nächst niedrigere Umdrehungsgeschwindigkeit geschaltet werden. Dieser Vorgang kann über die Kontrollroutine sooft erfolgen, bis das Laufwerk mit einfacher Umdrehungsgeschwindigkeit (ca. 500 U/min) dreht. Falls Geschwindigkeitsvorgaben erforderlich sind, wird die Umdrehungsgeschwindigkeit den Erfordernissen (z. B. MPEG-4-fach oder Audio-1-fach) angepaßt und eingestellt.

Zusammengefaßt ergibt sich somit folgende Betriebsweise. Wird der Schalter S nur kurzzeitig gedrückt, z. B. maximal nur 0,5 Sekunden, dann löst der Prozessor 6 über die Motorsteuerung 7 eine Umschaltung auf einem niedrigeren Geschwindigkeitsbereich aus. Dieser Vorgang kann solange wiederholt werden, bis vorher aufgetretene Vibrationen und/oder zu große Geräuschemissionen entweder ganz verschwunden sind oder wenigstens auf ein erträgliches Mindestmaß reduziert werden konnten. Wird der Schalter länger gedrückt, dann löst der Prozessor 6 über die Schubladensteuerung 8 die Ausgabe der CD-Scheibe aus, worauf die Schublade samt CD-Scheibe ausgefahren wird.

Mit Hilfe von Akustik- und /oder Vibrationssensoren, deren Signale über den Prozessor 6 der Motorsteuerung 7 zugeführt werden, kann die bei störenden Vibrationen und/oder Geräuschemissionen gewünschte Drehzahlreduzierung auch automatisch herbeigeführt werden.

## Patentansprüche

1. CD-ROM-Laufwerk mit mehreren, in n-facher Stufung wählbaren Geschwindigkeitsbereichen und wahlweise innerhalb jedes Geschwindigkeitsbereichs konstanten oder zwischen innerem und äusserem Umfang linear verringerten Umdrehungszahlen mit der Maßgabe, daß bei auftretenden Vibrationen mit Hilfe von Steuermitteln eine Umschaltung auf eine niedrigere Geschwindigkeit erfolgt,
**dadurch gekennzeichnet,**
daß den Steuermitteln zur Geschwindigkeitsreduzierung eine manuell betätigbare Taste(s) zur Umschaltung des Laufwerks in einen jeweils um eine Stufe (n-1) niedrigeren Geschwindigkeitsbereich zugeordnet ist.

2. CD-ROM-Laufwerk nach Anspruch 1,
**dadurch gekennzeichnet,**
daß die Taste zur Umschaltung in einen niedrigern Geschwindigkeitsbereich mit der Bedientaste für den CD-Schubladentransport kombiniert ist und je nach Dauer des Tastendrucks jeweils eine der beiden Funktionen auslösbar ist.

3. CD-ROM-Laufwerk nach Anspruch 2,
**dadurch gekennzeichnet,**
die Bedientaste für den Schubladentransport derart steuerbar ist, daß bei kurzzeitiger Aktivierung der Taste eine Drehzahlreduzierung und bei längerem Tastendruck eine Transportbewegung der CD-Schublade ausgelöst wird.

## Claims

1. CD-ROM drive having a plurality of speed ranges which can be selected in n steps and is optionally constant within each speed range or whose revolution speeds are reduced linearly between the inner and outer circumference, with the provision that a change to a lower speed is made, with the aid of control means, if vibration occurs,
characterized
in that the control means for speed reduction are assigned a push button(s) which can be operated manually in order to switch the drive to a speed range which is in each case lower by one step (n-1).

2. CD-ROM drive according to Claim 1,
characterized
in that the push button for switching to a lower speed range is combined with the control push button for the CD drawer transport and one of the two functions can in each case be initiated depending on the time from which the push button is pressed.

3. CD-ROM drive according to Claim 2,
characterized
in that the control push button for the drawer transport can be controlled in such a manner that the rotation speed is reduced if the push button is activated briefly, and a transport movement of the CD drawer is initiated if the push button is pressed for a longer period.

## Revendications

1. Lecteur de CD-ROM comportant plusieurs plages de vitesse pouvant être choisies de manière étagée comme multiple de n et comportant des nombres de tours au choix constants à l'intérieur de chaque plage de vitesse ou réduits de manière linéaire entre le pourtour intérieur et le pourtour extérieur, avec la condition qu'il s'effectue un passage à une vitesse plus basse à l'aide de moyens de commande s'il survient des vibrations,
caractérisé en ce qu'il est associé aux moyens de commande servant à réduire la vitesse une touche (5) pouvant être actionnée manuellement et servant à faire passer le lecteur à une plage de vitesse plus basse d'un pas (n-1).

2. Lecteur de CD-ROM suivant la revendication 1, caractérisé en ce que la touche servant à faire passer à une plage de vitesse plus basse est combinée à la touche d'actionnement du déplacement du tiroir pour CD et en ce que, suivant la durée d'enfoncement de la touche, il peut être déclenché l'une des deux fonctions.

3. Lecteur de CD-ROM suivant la revendication 2, caractérisé en ce que la touche d'actionnement pour le déplacement du tiroir peut être commandée de telle façon que, lorsque l'on active la touche pendant une brève durée, il est déclenché une réduction de la vitesse de rotation et, lorsque l'on enfonce la touche plus longtemps, il est déclenché un déplacement de transport du tiroir pour CD.
